# EUROPÄISCHE PATENTSCHRIFT

(11) **EP 0 618 741 B1**
(45) Veröffentlichungstag und Bekanntmachung des Hinweises auf die Patenterteilung: **18.03.1998**
(21) Anmeldenummer: 93119583.8
(22) Anmeldetag: 04.12.1993
(51) Int. Cl.: H04Q 1/14

(54) **Verteileranordnung, insbesondere für den Hauptverteiler von Fernsprech- und Datenleitungen**
Distribution arrangement, especially for the main distribution of telephone and data lines
Montage de répartition, en particulier pour le répartiteur principal de lignes téléphoniques et lignes de données

(30) Priorität: 19.02.1993 DE 9302456 U
(43) Veröffentlichungstag der Anmeldung: 05.10.1994
(73) Patentinhaber: KRONE Aktiengesellschaft, 14167 Berlin-Zehlendorf (DE)
(72) Erfinder: Delakowitz, Bernd, D-13593 Berlin (DE); Sander, Claus, D-10717 Berlin (DE); Hegner, Gunter, D-13509 Berlin (DE)

(56) Entgegenhaltungen:
- EP-A- 0 042 314
- DE-U- 9 302 456
- FR-A- 2 431 230
- FR-A- 2 523 794

## Beschreibung

Die Neuerung bezieht sich auf eine Verteileranordnung, insbesondere für den Hauptverteiler von Fernsprech- und Datenleitungen gemäß dem Oberbegriff des Anspruches 1.

Der Hauptverteiler, insbesondere von Fernsprechleitungen, schließt die Systemkabel bzw. die Vermittlungsseite und die Ortskabel bzw. die Teilnehmerseite ab. Im Hauptverteiler sind Trenn- und Prüfmittel sowie Möglichkeiten zum Schutz der Leitungswege und zur Rangierung zu schaffen. Die Organisation des Hauptverteilers wird durch diese Forderungen bestimmt. Eine wichtige Rolle spielt dabei der Wunsch und die Notwendigkeit, die Rangiermöglichkeit für alle Anschlüsse so kurz wie möglich zu halten, um die übertragungstechnischen Werte und die Servicefreundlichkeit der Verteileranordnung zu optimieren.

Die bekannten, herkömmlichen Hauptverteiler sind waagerecht-senkrecht organisierte Hauptverteiler in Folge der waagerechten Kabelführung auf der Systemseite (Vermittlungsseite) und der senkrechten Kabelführung auf der Netzseite (Teilnehmerseite), siehe FR-A-2 431 230.

Aus der CH-PS 623.698 ist eine Verteileranordnung bekannt, in der das Verteilergestell aus zwei aus U-Profil-Trägern gebildeten Basisteilen besteht, an denen mehrere Lagerböcke befestigt sind, an denen mit Anschlußmodulen bestückte Schwenkrahmen mit ihrer einseitig angeordneten Schwenkachse schwenkbar gelagert sind. Die Schwenkbarkeit der Schwenkrahmen soll eine gute Zugänglichkeit zu den hinter den eingeklappten Schwenkrahmen befindlichen Kabelkanälen ermöglichen und das Anschließen von Kabeladern an die in den Schwenkrahmen angeordneten Anschlußmodule erleichtern. Die vorgesehenen Kabelkanäle zwischen und neben den Schwenkrahmen sowie die im Ruhezustand zueinander im Winkel von 60 bis 120° stehenden Schwenkrahmen bedingen einen großen Raumbedarf. Die Kabelkanäle sind auch bei herausgeschwenkten Schwenkrahmen nicht optimal für Verkabelungsarbeiten zugänglich. Ein Beschalten der in der Nähe der Schwenkachse liegenden Bereich der Anschlußmodule mit Kabeladern ist auch bei herausgeschwenktem Schwenkrahmen schlecht möglich, zumal dieser Bereich der Anschlußmodule nahe einem benachbarten Bereich des Basisteils liegt und nicht ungehindert zugänglich ist. Die Rangierwege zwischen den Verteilschienen sind relativ lang, insbesondere dadurch, daß auf einem Rahmen nur die Module für eine Kabelseite vorgesehen sind, so daß ein Rangieren zwischen zwei Rahmen erfolgen muß.

Der Neuerung liegt von daher die Aufgabe zugrunde, eine Verteileranordnung der gattungsgemäßen Art zu entwickeln, bei der die Rangiermöglichkeiten und die Anpassung an die Möglichkeiten computergesteuerter Vermittlungssysteme verbessert sind und bei der dadurch die Organisation eines Hauptverteilers optimiert wird.

Zur Lösung dieser Aufgabe sieht die Neuerung die kennzeichnenden Merkmale des Anspruches 1 vor. Der Hauptverteiler wird neu organisiert, indem die Teilnehmer- und die Systemseite modulweise benachbart werden, d.h. die waagerechte-senkrechte Aufteilung wird aufgehoben. Auf einem Rahmen befinden sich in gleicher Reihe die Module für die Teilnehmerkabel und für die Systemkabel, so daß senkrechte Reihen auf einem Rahmen benachbart für alle Teilnehmeranschlüsse und für die Systemanschlüsse gebildet sind. Hierdurch werden kürzeste Rangierwege ermöglicht. Es wird bei computergesteuerten Vermittlungssystemen die Möglichkeit ausgenutzt, zwischen dem Teilnehmer und einem beliebigen freien Port des Systems rangieren zu können. Es wird der freie Systemport gewählt, der am nächsten liegt. Dadurch werden verkürzte Rangierwege und verbesserte übertragungstechnische Werte erreicht. Der Hauptverteiler stellt die Rangiermöglichkeiten für alle Anschlüsse zur Verfügung. Die Konzeption der Verteileranordnung ermöglicht die Aufstellung von Verteilergestell-Reihen mit wenigen Handgriffen. Der Wegfall von Rangierräumen sowie die bessere Organisation der Kabelwege im Zusammenhang mit den schwenkbaren Profilrahmen, führen zum Zusammenrücken der Verteilergestell-Reihen und damit zu höherer Teilnehmerdichte (Raumeinsparung). Es sind alle Arbeiten von einer Seite durch eine Person ausführbar. Durch die kürzeren Rangierwege werden geringere Übersprechstörungen und Dämpfungen und höhere Übertragungs-Bit-Raten erreicht. Es werden die Vorteile der Schneid-Klemm-Technik ausgenutzt.

Weitere vorteilhafte Ausgestaltungen der Neuerung ergeben sich aus den Unteransprüchen.

Die Neuerung ist nachfolgend anhand eines in den Zeichnungen dargestellten Ausführungsbeispieles einer Verteileranordnung näher erläutert. Es zeigen:
- Fig. 1: eine schematische Darstellung der Kabelführungen für die Teilnehmer- und für die Systemseite,
- Fig. 2: eine schematische Darstellung des Stromweges zwischen Teilnehmer- und Systemseite,
- Fig. 3: eine perspektivische Vorderansicht einer Verteileranordnung,
- Fig. 4: eine perspektivische Ansicht von drei an einem Z-Blech angeordneten schwenkbaren Profilrahmen und
- Fig. 5: eine schematische Darstellung der Kabelführung im Hauptverteiler (Draufsicht).

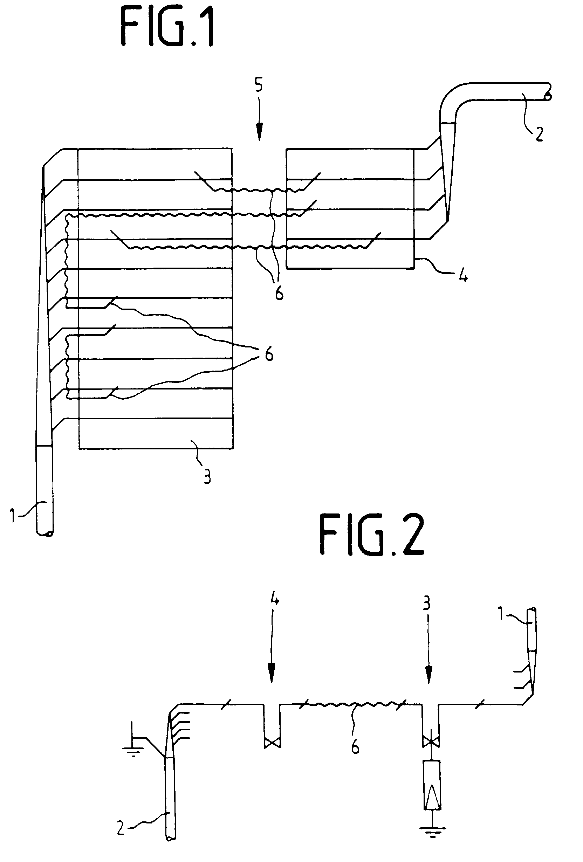

Die Fig. 1 zeigt in einer schematischen Darstellung das Organisationsprinzip für die Verteileranordnung, wie es durch die gezeigte Art der Heranführung eines Teilnehmerkabels 1 und eines Systemkabels 2 an die Module 3,4 an einen Hauptverteiler 5 sowie durch die Verbindung der Module 3,4 miteinander über Rangierleitungen 6 vorgegeben ist. Das Systemkabel 2, welches mit einem nicht dargestellten Terminal zum Zuordnen von Ruf-Nummern verbunden ist, wird an die Module 4 herangeführt, die beispielsweise aus Verbindungsleisten (nicht dargestellt) in Schneid-Klemm-Technik bestehen und Kontaktelemente zum Prüfen, Trennen und Rangieren (Verbinden) enthalten, über die über Rangierleitungen 6 eine gewünschte Verbindung zu einem benachbarten Modul 3 auf der Teilnehmerkabelseite hergestellt wird. Das jeweilige Modul 3 auf der Teilnehmerkabelseite besteht beispielsweise ebenfalls aus Verbindungsleisten (nicht dargestellt) in Schneid-Klemm-Technik mit Kontaktelementen zum Rangieren (Verbinden), zum Überspannungs- oder Überstromschutz, zur Erdung und zum Anschluß des Teilnehmerkabels 1. Das Prinzipschaltbild des Stromweges einer Leitungsverbindung zwischen dem Systemkabel 2 und dem Teilnehmerkabel 1 zeigt die Fig. 2. Es ist dabei die Anschaltung von digitalen, dekadischen und PCM-Systemen möglich.

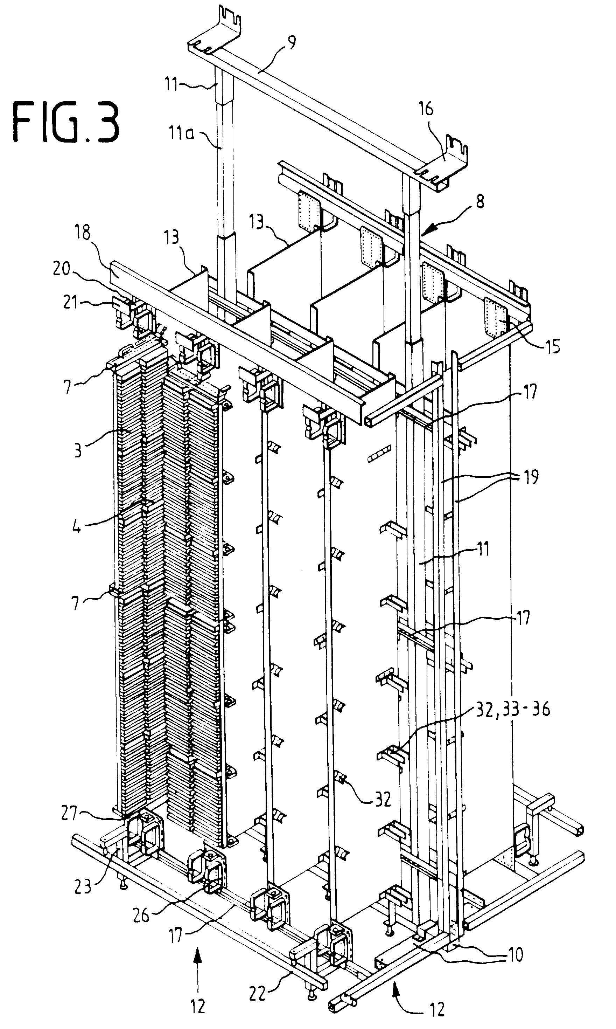

In der Fig. 3 ist in einer perspektivischen Vorderansicht der Aufbau einer Verteileranordnung gezeigt, in der herausschwenkbare Profilrahmen 7 angeordnet sind, in die Module 3,4 eingerastet sind.

Die Verteileranordnung besteht aus einem Rahmen 8, der aus Kopfschienen 9, Fußschienen 10 und Stützen 11 gebildet ist. Dieser Rahmen 8 erlaubt den Aufbau von Verteilergestell-Reihen 12 unabhängig von Wänden. Auch eventuell vorhandene Säulen können problemlos in die Verteilergestell-Reihen 12 einbezogen werden. Der aus den Figuren 1 und 2 erkennbare Wegfall von Rangierräumen sowie eine bessere Organisation der Kabelwege im Zusammenhang mit den schwenkbaren Profilrahmen 7, führen zum Zusammenrücken der Verteilergestell-Reihen 12 und damit zu einer höheren Teilnehmerdichte, d.h. es können mehr Teilnehmerleitungen pro Raumeinheit geschaltet werden. Der Rahmen 8 besteht vorzugsweise aus Rechteck-Rohrprofilen. An den Rahmen 8 sind Z-Bleche 13 angeschraubt, die mit Montageplatten 15 und mit Kabelhalterungen 32 bis 36 verbunden sind. An den Z-Blechen 13 sind die schwenkbar gelagerten Profilrahmen 7 angeordnet, die für die Aufnahme der Module 3,4 vorgesehen sind.

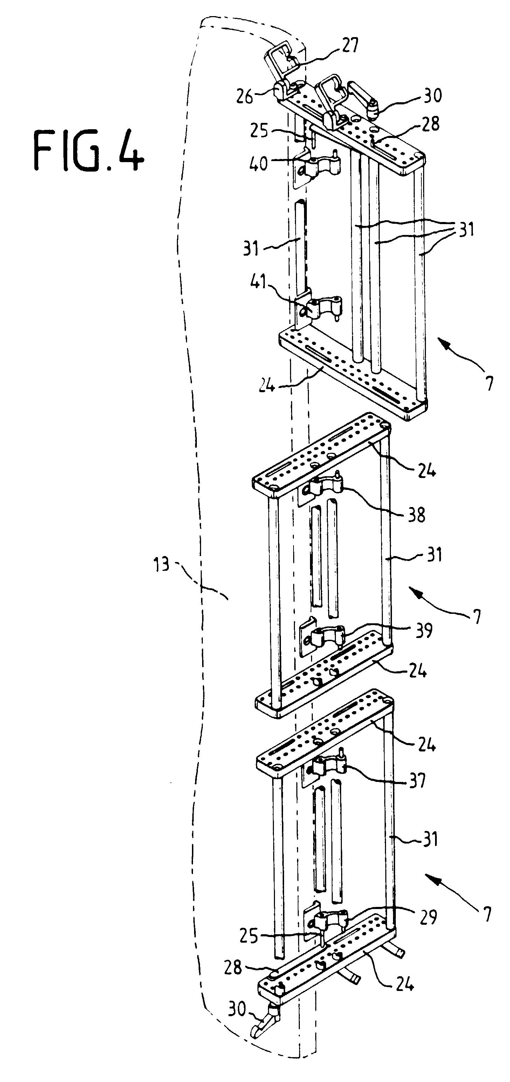

Im folgenden wird die Montagefolge einer Verteileranordnung in den Grundzügen und mit den wesentlichen Bestandteilen anhand der Figuren 3 und 4 beschrieben. Es wird bei der Montage zwischen drei Varianten der Gestelle unterschieden,
"an der Wand befestigte Gestelle mit Rahmen"
"an der Wand befestigte Gestelle ohne Rahmen"
"freistehende Gestelle mit Rahmen".

Im folgenden wird nur die in der Fig. 1 dargestellte freistehende Gestellvariante mit Rahmen beschrieben, die für einen zweiseitigen Verteiler konzipiert ist.

Die Fußschienen 10 werden ausgerichtet und miteinander verbunden. Die Stütze 11 wird mit der Fußschiene 10 verschraubt. Zum Höhenausgleich zur Decke (nicht dargestellt) werden Ausgleichsstützen 11a verwendet, die teleskopartig in die Stützen 11 eingebracht und mit diesen sowie mit der Kopfschiene 9 verschraubt werden. Die Kopfschiene 9 wird mit Winkeln 16 an der Decke befestigt. Mit den Stützen 11 werden eine obere, eine mittlere und eine untere C-Schiene 17 fest verschraubt. An die C-Schienen 17 werden die vormontierten Z-Bleche 13 (vormontiert mit nicht näher ausgeführten Halte- und Befestigungselementen) fest verschraubt. Die obere und die untere C-Schiene 17 werden mit der Stütze 11 fest verschraubt. Die vorne angeordneten C-Schienen 17 werden oben und unten mit den Montageplatten 15 auf den Z-Blechen 13 verschraubt. Mit der oberen vorderen C-Schiene 17 (nicht sichtbar) wird eine Blende 18 verschraubt. An den Enden des Verteilergestells werden Endschienen 19 mit den C-Schienen 17 hinten oben, mittig und unten verschraubt. Auf den oberen Rangierwinkel 20, welcher an der Montageplatte 15 befestigt ist, wird jeweils ein Schild 21 zur Reihenkennzeichnung gesteckt. Schutzrohre 22 werden mit einer Zwischenstütze 23 verbunden, die mit der unteren C-Schiene 17 vorn verschraubt werden.

In dieses Verteilergestell werden die schwenkbaren Profilrahmen 7 entsprechend den Darstellungen in der Figur 4 wie folgt eingesetzt:
Im allgemeinen werden drei Profilrahmen 7 schwenkbar von unten nach oben montiert. An den unteren Profilrahmen 7 wird der lange Gewindebolzen 25 der Riegelstange 28 an ein Scharnier 29 unten drehbar befestigt. Ein oberes Scharnier 37 wird an das Z-Blech 13 geschraubt, und der Profilrahmen 7 wird schwenkbar in das obere Scharnier 37 oben eingehängt. Das vormontierte untere Scharnier 29 wird mit der Riegelstange 28 in den Profilrahmen 7 schwenkbar eingesetzt. Das untere Scharnier 29 wird an das Z-Blech 13 geschraubt. Der Klemmhebel 30 wird auf die Riegelstange 28 bewegbar aufgeschraubt. Der Klemmhebel 30 wird nach unten gezogen, ausgerichtet und dann nach oben gedrückt.

Der mittlere Profilrahmen 7 wird wie folgt montiert. Das obere Scharnier 38 wird an das Z-Blech 13 geschraubt. Der Profilrahmen 7 wird schwenkbar in das obere Scharnier 38 eingehängt. Das untere Scharnier 39 wird in den Profilrahmen 7 schwenkbar eingesetzt. Das untere Scharnier 39 wird an das Z-Blech 13 geschraubt.

Der obere Profilrahmen 7 wird montiert, indem der lange Gewindebolzen 25 der Riegelstange 28 an das obere Scharnier 40 drehbar befestigt wird. Das vormontierte obere Scharnier 40 wird mit der Riegelstange 28 an das Z-Blech 13 geschraubt. Der Profilrahmen 7 wird schwenkbar in das obere Scharnier 40 eingehängt. Das untere Scharnier 41 wird in den Profilrahmen 7 schwenkbar eingesetzt. Das untere Scharnier 41 wird an das Z-Blech 13 geschraubt. Der Klemmhebel 30 wird auf die Riegelstange 28 beweglich aufgeschraubt. Der Klemmhebel 30 wird nach oben gezogen, ausgerichtet und dann nach unten gedrückt.Am oberen Profilrahmen 7 wird oben ein Rastenhaltewinkel 26 aufgeschraubt, und eine Rangieröse 27 wird auf den Rastenhaltewinkel 26 in 45 °-Stellung aufgerastet.

Die Profilrahmen 7 werden insgesamt von jeweils zwei Lochplatten 24 gebildet, die über jeweils vier Rundprofilstangen 31 miteinander starr verbunden sind. Die Abstände der jeweils äußeren Rundprofilstangen 31 zu den jeweils innen liegenden Rundprofilstangen 31 entspricht jeweils der Länge der nicht dargestellten Verbindungsleisten in Schneid-Klemm-Technik , die auf diese Rundprofilstangen 31 aufgerastet sind. Die Verbindungsleisten in Schneid-Klemm-Technik bilden die Module 3,4 zur Aufnahme der Teilnehmerkabel 1 und der Systemkabel 2 entsprechend der Darstellung in den Figuren 1 bis 3.

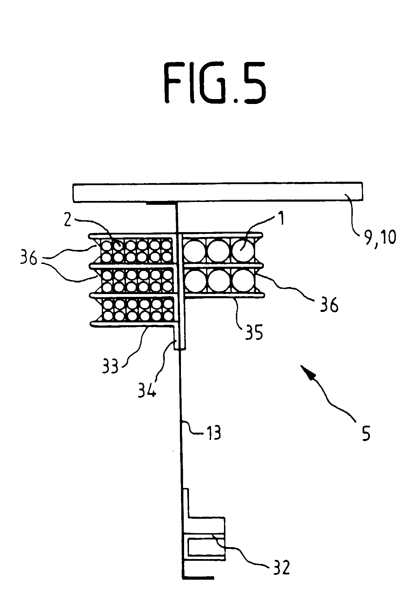

In der Fig. 5 ist schematisch die Kabelführung für das Teilnehmerkabel 1 und für das Systemkabel 2 im Hauptverteiler 5 dargestellt. Das verwendete Kabel-Schnell-Montage-System erlaubt das einfache Einlegen der Kabel 1,2 nach Sektionen geordnet. Die Teilnehmerkabel 1 werden im allgemeinen rechts vom Z-Blech 13 in die u-förmigen Aufnahmen 35 eingelegt und füllen diese Aufnahmen 35 im hinteren Teil beginnend mit den Teilnehmerkabeln 1 für die oberen Profilrahmen 7 (Fig. 3 und 4). Die Systemkabel 2 werden links vom Z-Blech 13 in die Winkel 33 eingelegt. Der hintere Teil der Winkel 33 wird beginnend mit den Systemkabeln 2 für die unteren Profilrahmen 7 gefüllt (Fig. 3 und 4).Die Kabel 1,2 werden mittels Clips 36 fixiert. Die Clips 36 sind aus federelastischem Material gefertigt und können leicht entfernt werden, um z.B. Kabel nachzulegen. Die Kabelhalter 32 dienen der bedarfsweisen Halterung der Kabel 1 bei der Heranführung. Das zeitraubende Binden der Kabel 1,2 ist zugunsten einer kurzen Montagezeit des Verteilers 5 vermieden.

## Patentansprüche

1. Verteileranordnung, insbesondere für den Hauptverteiler von Fernsprech- und Datenleitungen, aus Verteilergestell, Verteilerrahmen, schwenkbaren Rahmen, zum Abschluß der Systemseite und der Teilnehmerseite,
**dadurch gekennzeichnet,** daß die Teilnehmerseite (1) und die Systemseite (2) auf einem Profilrahmen (7) modulweise benachbart angeordnet und senkrecht übereinander zu nebeneinander liegenden Gestellreihen (12) aufgebaut sind.

2. Verteileranordnung nach Anspruch 1, dadurch gekennzeichnet, daß die Profilrahmen (7) zur nebeneinander liegenden Aufnahme der Module (3) für die Teilnehmerseite (1) und der Module (4) für die Systemseite (2) aus zwei über zueinander parallel geführte Rundprofilstangen (31) miteinander verbundene Lochplatten (24) bestehen und an Stützen (11,13) des Verteilergestelles gelagert sind.

3. Verteileranordnung nach den Ansprüchen 1 und 2, dadurch gekennzeichnet, daß die Breite des Profilrahmens (7) im wesentlichen durch den Abstand der Rundprofilstangen (31) zueinander bestimmt ist und durch die Länge der verwendeten Verbindungsleisten in Schneid-Klemm-Technik definiert ist, welche auf die Rundprofilstangen (31) aufgerastet sind.

4. Verteileranordnung nach den Ansprüchen 1 bis 3, dadurch gekennzeichnet, daß die Profilrahmen (7) nach vorne schwenkbar montiert sind.

5. Verteileranordnung nach den Ansprüchen 1 bis 4, dadurch gekennzeichnet, daß an den Stützen (11,13) ein oberes und ein unteres Scharnier (40,41) montiert sind, die mit Riegelstangen (28) mit Bolzen (25) auf der oberen und der unteren Lochplatte (24) in Eingriff stehen und in die der Profilrahmen (7) schwenkbar eingehängt ist.

6. Verteileranordnung nach den Ansprüchen 1 bis 5, dadurch gekennzeichnet, daß die Profilrahmen (7) mit einer Arretiervorrichtung (28,30) versehen sind.

7. Verteileranordnung nach den Ansprüchen 1 bis 6, dadurch gekennzeichnet, daß mit der Riegelstange (28) ein Klemmhebel (30) verbunden ist.

8. Verteileranordnung nach den Ansprüchen 1 bis 7, dadurch gekennzeichnet, daß die übereinander liegenden Profilrahmen (7) mittels einer Kupplung verbunden sind.

9. Verteileranordnung nach den Ansprüchen 1 bis 8, dadurch gekennzeichnet, daß die Stützen (11) durch Z-Bleche (13) gebildet sind.

10. Verteileranordnung nach den Ansprüchen 1 bis 9, dadurch gekennzeichnet, daß Kabelhalterungen (32 bis 36) aus Winkeln (33) und/oder aus U-förmigen Aufnahmen (35) und aus federelastischen Clips (36) vorgesehen sind.

11. Verteileranordnung nach den Ansprüchen 1 bis 10, dadurch gekennzeichnet, daß Mittel (10, 11) zur Aufstellung im freien Raum oder auch Mittel zur Befestigung an einer wand vorgesehen sind.

## Claims

1. Distributor arrangement, in particular for the main distribution frame of telephone and data lines, comprising a distributor rack, distributor frame, pivoting frame, for termination on the system side and on the subscriber side, characterized in that the subscriber side (1) and the system side (2) are arranged adjacent to one another in a modular manner on a profile frame (7) and are constructed vertically one above the other to form side-by-side rack rows (12).

2. Distributor arrangement according to Claim 1, characterized in that the profile frames (7) for accommodating (side-by-side) the modules (3) for the subscriber side (1) and the modules (4) for the system side (2) comprise two perforated plates (24), which are connected to one another via mutually parallel round-profile rods (31), and are mounted on supports (11, 13) of the distributor rack.

3. Distributor arrangement according to Claims 1 and 2, characterized in that the width of the profile frame (7) is governed essentially by the distance between the round-profile rods (31) and is defined by the length of the connecting strips used, which are based on insulation-piercing terminal technology and are latched onto the round-profile rods (31).

4. Distributor arrangement according to Claims 1 to 3, characterized in that the profile frames (7) are mounted such that they can pivot forwards.

5. Distributor arrangement according to Claims 1 to 4, characterized in that an upper hinge (40) and a lower hinge (41) are mounted on the supports (11, 13), engage by means of bolt bars (28) with bolts (25) on the upper and the lower perforated plates (24) and in which the profile frame (7) is suspended such that it can pivot.

6. Distributor arrangement according to Claims 1 to 5, characterized in that the profile frame (7) is provided with a locking apparatus (28, 30).

7. Distributor arrangement according to Claims 1 to 6, characterized in that a clamping lever (30) is connected to the bolt bar (28).

8. Distributor arrangement according to Claims 1 to 7, characterized in that the profile frames (7) located one above the other are connected by means of a coupling.

9. Distributor arrangement according to Claims 1 to 8, characterized in that the supports (11) are formed by Z-section plates (13).

10. Distributor arrangement according to Claims 1 to 9, characterized in that the cable holders (32 to 36) are provided from brackets (33) and/or from U-shaped holders (35) and from resilient clips (36).

11. Distributor arrangement according to Claims 1 to 10, characterized in that means (10, 11) are provided for installation in the open air, or, alternatively, means are provided for mounting on a wall.

## Revendications

1. Montage de répartition, en particulier pour le répartiteur principal de lignes téléphoniques et lignes de données, comprenant un bâti de répartition, des cadres de répartition, des cadres pivotants, pour fermer le côté système et le côté abonné,
caractérisé en ce que le côté abonné (1) et le côté système (2) sont disposés à proximité l'un de l'autre de manière modulaire sur un cadre profilé (7) et montés perpendiculairement, l'un au-dessus de l'autre, par rapport à des séries de bâtis (12) juxtaposées.

2. Montage de répartition suivant la revendication 1, caractérisé en ce que les cadres profilés (7) servant au logement côte à côte des modules (3) destinés au côté abonné (1) et des modules (4) destinés au côté système (2), sont constitués de deux plaques perforées (24) reliées l'une à l'autre par des tiges profilées rondes (31), disposées parallèlement l'une à l'autre, et sont montés sur des supports (11, 13) du bâti de répartition.

3. Montage de répartition suivant les revendications 1 et 2, caractérisé en ce que la largeur du cadre profilé (7) est principalement déterminée par l'écartement des tiges profilées rondes (31) entre elles et définie, dans la technique d'autodénudage, par la longueur des barrettes de connexion utilisées qui sont encliquetées sur les tiges profilées rondes (31).

4. Montage de répartition suivant les revendications 1 à 3, caractérisé en ce que les cadres profilés (7) sont montés à pivotement vers l'avant.

5. Montage de répartition suivant les revendications 1 à 4, caractérisé en ce que, sur les supports (11, 13), sont montées une charnière supérieure et une charnière inférieure (40, 41) qui sont en prise avec des biellettes de verrouillage (28) pourvues d'une broche (25), sur les plaques perforées (24) supérieure et inférieure, et dans lesquelles le cadre profilé (7) est suspendu à pivotement.

6. Montage de répartition suivant les revendications 1 à 5, caractérisé en ce que les cadres profilés (7) sont pourvus d'un dispositif d'arrêt (28, 30).

7. Montage de répartition suivant les revendications 1 à 6, caractérisé en ce qu'un levier de serrage (30) est relié à la biellette de verrouillage (28).

8. Montage de répartition suivant les revendications 1 à 7, caractérisé en ce que les cadres profilés (7) superposés sont reliés au moyen d'un dispositif d'accouplement.

9. Montage de répartition suivant les revendications 1 à 8, caractérisé en ce que les supports (11) sont formés par des plaques en Z (13).

10. Montage de répartition suivant les revendications 1 à 9, caractérisé en ce que sont prévues des fixations de câbles (32 à 36) comprenant des équerres (33) et/ou des logements en forme de U (35) et des clips (36) élastiques à ressort.

11. Montage de répartition suivant les revendications 1 à 10, caractérisé en ce que sont prévus des moyens (10, 11) de montage dans un espace libre ou encore des moyens de fixation à une paroi.
